# EUROPEAN PATENT APPLICATION

(11) **EP 1 215 598 A1**
(43) Date of publication of application: **19.06.2002**
(21) Application number: 00204478.2
(22) Date of filing: 13.12.2000
(51) Int. Cl.: G06F 17/60

(54) **A computer supported method for converting business initiatives into business companies**

(71) Applicant: HoldingZOO B.V., 5612 AJ Eindhoven (NL)
(72) Inventor: Melis, Henricus Franciscus Carel Albertus, 5691 JN Son (NL)
(74) Representative: Dohmen, Johannes Maria Gerardus

(57) **Abstract**

A computer supported method and a tool for converting business initiatives (20, 21, 22), in particular e-business initiatives, into business companies. Computer data pertaining to a business initiative (20, 21, 22) are electronically acquired and selected by an electronic audition process (23), among others using data available in a computer data base (24). The audition process (24) results in one of three decisions comprising: acceptance, return, and rejection of a business initiative. After final casting (25) of an optimized business plan for an accepted business initiative, using data available in a computer database (26), a pre-production phase (30) is started, based on an execution plan available in a computer database (28). Finally, a production phase (31) is started resulting in a business company. Activities for financing (27) of an accepted business initiative are performed after the final casting (25) of its business plan.

## Description

### Field of the Invention

The present invention relates generally to the processing of business initiatives and, in particular, to the conversion of business initiatives into business companies.

### Background of the Invention

Generally, business initiatives, that is ideas for creating a business, and the funds for financing the creation of business companies from said business initiatives are not in the same hand. Accordingly, financial funding sources and developers of business initiatives have to be brought into contact with each other in order to create a business company for realising a particular business initiative.

Many business initiatives are developed by young, enthusiastic entrepreneurs which face two major challenges: quick financing and fast realisation. Within large corporations scores of business initiatives exist, however bringing them to the attention of the management in order to make a decision about the funding and realisation of such an initiative is often a great problem. Such initiatives are called spin-ups. Developing such initiatives into a separate enterprise is called spin-out.

Further, numerous companies have a need to expand their services to other territories. For example, American companies may have a need to expand their services to Europe. In such cases too, there is a need for facilitating the expansion by gathering financial funding sources.

### Summary of the Invention

It is an object of the present invention to provide a tool for converting business initiatives into business companies, either initiatives of entrepreneurs, initiatives from within existing companies or corporations, and initiatives for the expansion of existing business activities to other territories or markets.

It is in particular an object of the present invention to provide a tool which is easy accessible and which has a substantial chance of being successful for those initiatives that provide a meaningful return on venture capital.

These and other objects, advantages and features of the present invention are realised in a computer supported method for converting business initiatives, in particular e-business initiatives, into business companies, which method comprises the steps of:
- acquiring computer data pertaining to a business initiative;
- screening and qualifying such business initiative data by an electronic audition process, resulting in one of three decisions comprising: acceptance, return, and rejection of the business initiative;
- final casting of an optimised business plan for an accepted business initiative, among others based on data available in a computer database;
- starting a pre-production phase based on an execution plan available in a computer database; and
- starting a production phase for executing the conversion of an accepted business initiative into a business company.

In accordance with the present invention, business initiatives are acquired using computer communication technology. In a first step, the electronically received business initiative data are screened and qualified by an electronic audition process which serves as the basis for determining whether a business idea is actually workable. A business initiative can be qualified as acceptable, or to be returned for further information, or an initiative can be rejected.

Those initiatives which eventually have been qualified positively are further evaluated during a so-called final casting step, wherein an accepted business initiative is casted into an optimised business plan, among others based on data available in a computer data base, and in a workshop with the person or persons which have generated the particular business initiative.

Only after the completion of the optimised business plan actions are undertaken to realise the financing of the initiative. In a so-called pre-production phase an execution plan of the initiative is compiled in close co-operation with potentional financial resources. The execution plan, among others, is based on data available in a computer data base.

The last step, the so-called production phase, consists of a number of parallel actions between the entrepreneur and the financial resources, in order to realise a working organisation within a certain period of time.

The method according to the invention has proven to provide a relatively high success rate, because only those business initiatives which, after selection, seem to be valuable are converted into business companies.

In accordance with a further embodiment of the method of the invention, the conversion process is based on a business, organisation, marketing, content and technique oriented approach. That is, with a focus on business modelling, on allocating the right human resources, on setting the legal and tax structures, defining branding, focusing on content development and syndication and, for example in the case of e-business initiatives, on developing a suitable ICT (Information Communication Technology) infrastructure.

The audition and final casting process as well as the pre-production phase and the production phase as disclosed above, are supported by a benchmarks and knowledge database pertaining to particular business initiatives, such as e-business initiatives, for example.

In accordance with a further embodiment of the present invention, the database is enhanced by data feedback from the audition and final casting process as well as the pre-production and the production phase, as a result of which the conversion process is further improved.

Because the financial funding sources, in accordance with the method of the present invention, are only brought in after selection of potentional business initiatives, ventures capital providers have qualified material to pick their most interested initiatives from. A financier may become a share holder of the eventually created business company.

In a preferred embodiment of the method according to the invention, the audition process comprises a computer controlled questionnaire for retrieving qualitative and quantitative data pertaining to a particular business initiative. This questionnaire or audit can be made available for access via a data communication network, such as, but not limited to, the Internet.

As disclosed above, the method according to the invention is both suitable for use with initiatives relating to business-to-consumer and business-to-business environments.

The method according to the invention can be executed by an intermediair operating between the entrepreneur and the venture capital providers. Such an intermediair may be the owner of the computer program, stored on a computer readable medium, and/or of the databases comprising data to be used with the method, as well as of computer equipment by which the computer programm is executed.

As indicated in the preamble, the method according to the invention can be used by entrepreneurs, entrapreneurs, i.e. business initiatives from within an enterprise, and for initiatives to expand business activities to other territories or markets.

The above-mentioned and other features and advantages of the invention are illustrated in the following description with reference to the enclosed drawings.

### Brief Description of the Drawings

Figure 1 shows, in a schematic and illustrative manner, a general outline of the method according to the invention.
Figure 2 shows, in a schematic and illustrative manner, the disciplines which are used for screening and qualifying business initiatives.
Figure 3 shows, in a flow chart type diagram, the several steps of the method according to the present invention for converting business initiatives into business companies.
Figure 4 shows a general outline of an implementation of the method according to the invention using computer technology.

### Description of Embodiments

Without the intention of a limitation, the invention will now be explained by its application relating to e-business initiatives, that is business initiatives within the so-called electronic commerce or e-commerce domain, wherein computer communication technology plays a critical roll.

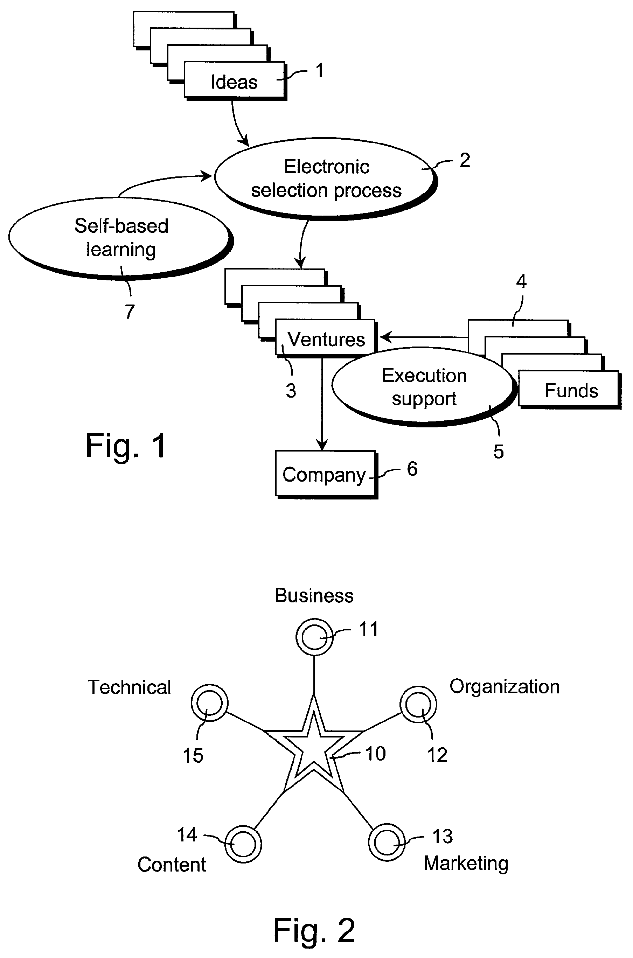

Figure 1 shows, in a schematic and illustrative manner, the outline of the method according to the invention. Reference numeral 1 designates a plurality of business initiatives, that is ideas for creating business companies. In accordance with the invention, these business initiatives 1 are electronically acquired and processed, as indicated by reference numeral 2. This processing step, among others, comprises screening and qualifying of the business initiatives by an electronic audition process, resulting in the acceptance, return or rejection of a business initiative.

For accepted business initiatives, venture capital from financial funds has to be realized, indicated by reference numeral 3, 4. As a final step the actual conversion of the business initiative into a business company is performed, indicated by reference numerals 5 and 6.

From a follow up of the performance of the created business company 6, in a feed back step, data are acquired for improving the processing of the generated business ideas, as designated by reference numeral 7.

As indicated in the preamble of the present description, many initiatives come from young, enthusiastic entrepreneurs which are interested in quick financing and fast realisation of their ideas. With the above process according to the present invention, the conversion can be realized within a 6-9 months lead time and anyhow within 3 to 6 months after a financier has been found.

In the process of the invention, venture capital partners become shareholders of the business company to be created. Further, with the approval of the initiator of the idea, an intermediate which controls and manages the method according to the invention may also become a partner in the company that is to be set up.

To make business idea operational, a number of disciplines have to be compiled in a so-called handshake methodology 10.

Figure 2 shows in a schematic manner a number of disciplines which are regarded to be essential in the conversion process.

In a first discipline, called business, and indicated by reference numeral 11, the focus is on business modelling.

A second discipline, indicated by reference numeral 12, relates to the organisation of the company to be created, having a primary focus on finding and selecting the right human resources, setting legal and tax structures, etc.

Marketing is a third essential discipline, in which the focus is on defining the branding of the business to be developed, i.e. indicated by reference numeral 13.

A further discipline is called content, i.e. indicated by reference numeral 14, in which the focus is on content development and syndication.

Last but not least, in particular with regard to e-business initiatives, an ICT infrastructure has to be developed, that is a technical discipline 15.

It will be appreciated that the numbering of the disciplines is arbitrarily.

The selection and qualification of the business initiatives by the computer supported method according to the invention is performed by making use of knowledge databases comprising relevant benchmark data, a standard project plan, etc.

The method according to the invention is not limited to entrepreneurs or so-called start-ups. Business initiatives for the creation of companies can also arise from within existing enterprises, i.e. so-called spin-outs, and from companies which like to expand their territory or market, such as US based companies which would like to expand their businesses to Europe, called US-Europe.

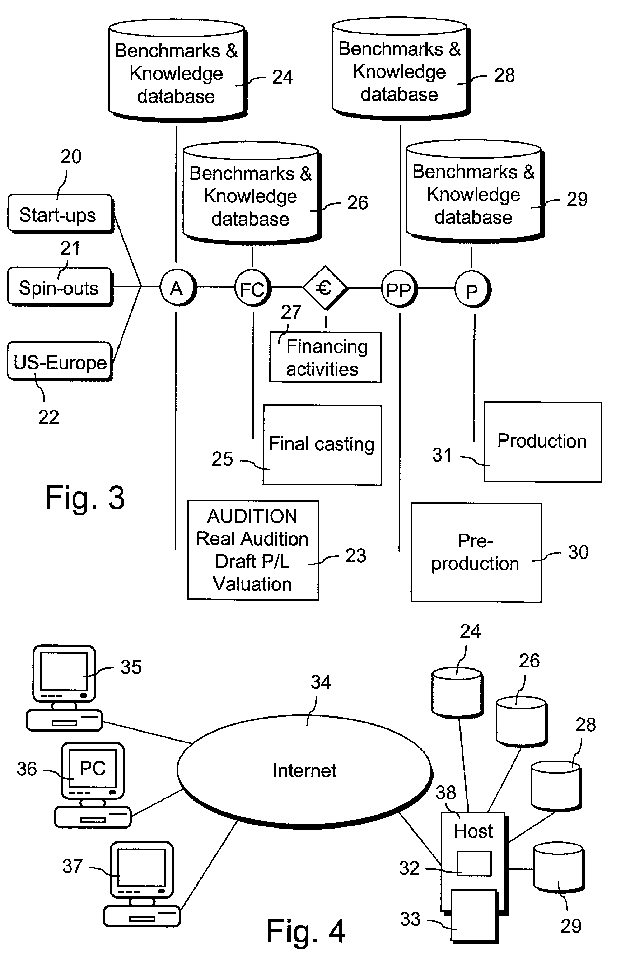

Figure 3 shows the computer supported method according to the invention in a flow chart type diagram, wherein initiatives from start-ups 20, spin-outs 21 or US-Europe 22 form electronic input data for a first processing step A, wherein a first qualification and screening of the acquired business initiative data is performed by an electronic audition process 23 using data from a benchmarks and knowledge database 24.

For those business initiatives which are selected from the Audition step (A), an optimized business plan is casted in a subsequent Final Casting step (FC), indicated by reference numeral 25 and, among others, based on data available in a benchmarks and knowledge database 26.

In a next step, after an optimized business plan has been casted, funding capital for the company to be set up is acquired, i.e. step 27.

After a financier has been found and enough venture capital has been secured, in a Pre-Production phase (PP) an execution plan of the initiative is compiled. This Pre-Production phase is preferably to be executed in close co-operation with partners of an intermediair which controls and executes the conversion method according to the invention. That is, partners having specific knowledge on issues which have to be considered for executing the initiative. This execution plan is based on a benchmarks and knowledge database 28, comprising data for real-life projects.

After the Pre-Production step, in a final Production phase (P) the initiator of the initiative, together with the intermediair and its partners, perform a number of parallel actions in order to produce a working (e-)business organisation 30. During the production phase data is used from a benchmarks and knowledge database 29.

Apart from using data from any of the electronic databases indicated, wether or not adapted to a particular business domain, such as an e-business domain, the several steps in the method according to the invention can be enhanced by workshops and other methods applicable to the conversion process.

Figure 4 shows in a block diagram a communication infrastructure comprising a host processing device 38 having access to several benchmarks and knowledge databases 24, 26, 28 and 29, which host processing device 38 comprises means 32 for running a computer program executing the method according to the invention, which computer program is stored on a computer readable medium 33.

The host processing device 38 connects to a data network 34, such as the Internet, for providing access to several remote processing devices 35, 36, 37.

Initiative data is provided from the processing devices 35, 36, 37, which can be Personal Computers, to the host processing device 38. The host processing device 38 and the benchmarks and knowledge databases 24, 26, 28 and 29 may be controlled and managed by an intermediate company having access to funds for financing the business initiatives.

Those skilled in the art will appreciate that the benchmarks and knowledge databases 24, 26, 28 and 29 may be combined into a single database comprising data pertaining to the method according to the invention.

The method according to the invention provides for an efficient qualification of business initiatives, in particular e-business initiatives, speeds up the conversion process as a whole, creates a structure to maximize the chance of success, minimizes the risk for financiers, and is an inherent self-learning (heuristic) process, having a feedback mechanism for increasing the overall and long term success of the method.

## Claims

1. A computer supported method for converting business initiatives, in particular e-business initiatives, into business companies, said method comprising the steps of:
- acquiring computer data pertaining to a business initiative;
- screening and qualifying said business initiative data by an electronic audition process, resulting in one of three decisions comprising: acceptance, return, and rejection of said business initiative;
- final casting of an optimised business plan for an accepted business initiative, among others based on data available in a computer database;
- starting a pre-production phase based on an execution plan available in a computer database; and
- starting a production phase for executing said conversion of said accepted business initiative into a business company.

2. A method according to claim 1, wherein said audition and final casting process and said pre-production phase and production phase are supported by a benchmarks and knowledge database.

3. A method according to claim 2, wherein said database is enhanced by data feedback from said audition and final casting process and said pre-production phase and production phase.

4. A method according to claim 2 or 3, wherein said benchmarks and knowledge database is adapted to a particular business domain, such as an e-business domain.

5. A method according to any of the previous claims, comprising the step of realising financing of an accepted business initiative after final casting of its business plan.

6. A method according to claim 5, wherein a financier becomes a shareholder of said business company.

7. A method according to any of the previous claims, wherein said audition process comprises a computer controlled questionnaire for retrieving qualitative and quantitative data pertaining to said business initiative.

8. A method according to any of the previous claims, wherein said conversion process is based on a business, organisation, marketing, content and technique oriented approach.

9. A method according to any of the previous claims, wherein a data communication network is used for the exchange of data pertaining to said steps.

10. A computer program stored on a computer readable medium for executing the method in accordance with any of the previous claims.

11. A computer program stored on a computer readable medium for executing a particular one of said audition and final casting process and said pre-production phase and production phase of the method in accordance with any of the claims 1-9.

12. A computer supported tool for converting business initiatives, in particular e-business initiatives, into business companies, arranged for executing the method and computer program in accordance with any of the previous claims.

13. A computer database comprising data pertaining to the method in accordance with any of the claims 1-9.

14. A computer database according to claim 13, wherein said data comprises benchmarks and knowledge data.
